# EUROPÄISCHE PATENTSCHRIFT

(11) **EP 1 273 060 B1**
(45) Veröffentlichungstag und Bekanntmachung des Hinweises auf die Patenterteilung: **19.01.2005**
(21) Anmeldenummer: 01933581.9
(22) Anmeldetag: 06.04.2001
(51) Int. Cl.: H01M 8/02

(54) **METALLISCHE BIPOLARE PLATTE**
METAL BIPOLAR PLATE
PLAQUE BIPOLAIRE METALLIQUE

(30) Priorität: 06.04.2000 DE 10017200
(43) Veröffentlichungstag der Anmeldung: 08.01.2003
(73) Patentinhaber: Ballard Power Systems Inc., Burnaby, British Columbia V5J 5J9 (CA)
(72) Erfinder: REPENNING, Detlev, 23569 Lübeck (DE); SPÄH, Richard, 88662 Überlingen (DE); KAISER, Wolfram, 79848 Bonndorf (DE); WIND, Jörg, 88090 Immenstaad (DE)
(74) Vertreter: Beyer, Andreas, Dr.
(86) Internationale Anmeldenummer: PCT/DE2001/001352
(87) Internationale Veröffentlichungsnummer: WO 2001/078175

(56) Entgegenhaltungen:
- EP-A- 0 780 916
- PATENT ABSTRACTS OF JAPAN vol. 2000, no. 15, 6. April 2001 (2001-04-06) -& JP 2000 353531 A (SUMITOMO ELECTRIC IND LTD), 19. Dezember 2000 (2000-12-19)
- PATENT ABSTRACTS OF JAPAN vol. 010, no. 213 (E-422), 25. Juli 1986 (1986-07-25) & JP 61 051770 A (TOSHIBA CORP), 14. März 1986 (1986-03-14)
- PATENT ABSTRACTS OF JAPAN vol. 1999, no. 13, 30. November 1999 (1999-11-30) & JP 11 219713 A (NISSHIN STEEL CO LTD), 10. August 1999 (1999-08-10)

## Beschreibung

Die Erfindung betrifft eine metallische Brennstoffzellen-Bipolarplatte, die insbesondere für den Einsatz in Brennstoffzellen vom Typ PEMFC (Polymer Electrolyte Fuel Cell) und DMFC (Direct Methanol Fuel Cell) geeignet ist.

PEMFC bzw. DMFC-Zellen haben die Aufgabe, chemische Energieträger, wie Wasserstoff (im Falle einer PEMFC) oder Alkohole wie Methanol (im Falle einer DMFC) in elektrische Energie umzuwandeln. Bei der Reaktion mit Wasserstoff entsteht Wasser, bei den Reaktionen mit Methanol entstehen neben Wasser Produkte wie Kohlendioxid, Ameisensäure, Formaldehyd und andere Produkte. Wird bei der elektrochemischen Umwandlung nicht reiner Wasserstoff, sondern Reformatgas eingesetzt, muss bedacht werden, dass zusätzlich Kohlenmonoxid im Gas enthalten ist. Im Zusammenspiel mit der perfluorierten und sulfonierten Elektrolytmembran ist außerdem davon auszugehen, dass Sulfationen und Fluorionen bzw. Fluor freigesetzt werden. Insgesamt liegt ein korrosives Gemisch bei einem pH zwischen 1,5 und 5 in den Zellen vor, das nicht nur die Degradation der katalytisch wirkenden Elektrode bewirkt, sondern auch die bipolaren Platten anzugreifen vermag. Aus diesem Grunde sind gegenwärtig vorwiegend bipolare Platten aus Kohlenstoff im Einsatz. Als Varianten werden auch Platten aus kunststoffgebundenem Kohlenstoff diskutiert. Kohlenstoffplatten besitzen nicht nur unter Kostenaspekten Nachteile, sondern sie besitzen Nachteile auch mit Blick auf die Massenfertigung und ihre Brüchigkeitsanfälligkeit.

Metallplatten haben aus Fertigungs- und Kostengründen prinzipielle Vorteile. Aber ihre Nachteile sind besonders bei Verwendung von austhenitischen Edelstählen die hohen Oberflächenwiderstände und ihre Korrosionsanfälligkeit. Andere Materialien, wie Kupfer- oder Aluminiumbasierte Legierungen sind besonders bezüglich der Korrosionsanfälligkeit noch problematischer.

Um die genannten Nachteile metallischer Bipolarplatten zu überwinden, können diese mit einer Beschichtung versehen werden. Wirksam sind dabei Edelmetallbeschichtungen aus Gold, Platin, Palladium oder andere. Die Oberflächenwiderstände mit derartigen Beschichtungen liegen unter 5 mΩ/cm², Kohlenstoffplatten weisen dagegen Widerstände in der Größenordnung von etwa 15 mΩ/cm² auf, also wesentlich höhere Widerstände. Allerdings scheiden die Edelmetallbeschichtungen allein schon aus Kostengründen aus. Eine nur 1 Mikrometer dicke Platinschicht ist auf einer Fläche von 1 m² immerhin ca. 20 g schwer. Natürlich sind auch Lösungen mit deutlich dünneren Schichten denkbar. Aber im Langzeiteinsatz der Brennstoffzellen sind Lochfraßkorrosionen mit den Edelmetallen auf weniger edlen Substraten sehr wahrscheinlich, die zu einer verstärkten Freisetzung von Nickelionen führen. Nickelionen schädigen insbesondere den Polymerelektrolyt und verursachen eine verstärkte Degradation der Zelle.

Vielfach werden statt dessen auch Beschichtungen auf Basis von Hartstoffen vorgeschlagen, wie z.B. Titannitrid oder -carbid, Chromnitrid oder anderer temärer Verbindungen, bestehend aus den Refraktärmetallen mit Stickstoff, Bor und Kohlenstoff. All diese Ausführungen erfüllen nicht die Anforderungen bezüglich der niederohmigen Oberflächenwiderstände. Oberffächenwiderstände oberhalb 20 mΩ/cm² verringern den Wirkungsgrad der Brennstoffzellen bei Hochstrombelastungen um ca. 5%.

Aus der EP 0 780 916 A1 ist eine bipolare Platte für eine Brennstoffzelle bekannt, die einen Kein aus einem Leichtmetall, beispielsweise Al oder Ti aufweist. Auf den Kern ist eine z.B. aus rostfreiem Stahl bestehende Schutzschicht aufgebracht, die mit einer weiteren Schicht aus TiN überzogen ist. Da die TiN-Schicht nicht als vollständig kontinuierliche Schicht aufgebracht werden kann, ist aufgrund von Defekten in der TiN-Schicht auch die darunter liegende Stahlschicht der korrosiven Umgebung in der Brennstoffzelle ausgesetzt.

Der Erfindung liegt die Aufgabe zugrunde, eine beschichtete metallische Brennstoffzellen-Bipolarplatte zu schaffen, die gegenüber der hochkorrosiven Umgebung in der Brennstoffzelle beständig ist und die gleichzeitig einen niedrigen Oberflächenwiderstand aufweist.

Diese Aufgabe wird mit dem Gegenstand des Patentanspruchs 1 gelöst. Vorteilhafte Ausgestaltungen der Erfindung sind Gegenstand von Unteransprüchen.

Erfindungsgemäß weist die metallische Bipolarplatte eine Beschichtung auf, welche zumindest im Bereich ihrer kontaktierenden Außenoberfläche mehrphasig ist. Dabei ist eine der Phasen eine metallische Phase und/oder deren α-Phase. Eine weitere Phase wird durch die chemische Verbindung aus einem oder mehreren Metallen der metallischen Phase und einem der Elemente N,O,C,B gebildet (im folgenden Verbindungsphase genannt).

Als Außenoberfläche der Beschichtung wird dabei jene Seite bezeichnet, an der der Kontakt zum benachbarten Bauelement innerhalb des Brennstoffzellenstapels erfolgt, also typischerweise zu einer Diffusionsschicht aus einem Kohlenstoffmaterial.

Die α-Phase eines Metalls ist der Zustand, bei dem (nach Maßgabe des Phasendiagramms) interstitiell Stickstoff, Sauerstoff, Kohlenstoff oder Bor gelöst ist.

N,O,C,B werden entsprechend dem Sprachgebrauch in der chemischen Fachliteratur im folgenden auch als Metalloide bezeichnet.

Die metallische Phase besteht bevorzugt aus einem der Elemente Cr, Ti, Mo, W, V oder Fe.

Als Verbindungsphase (im folgenden auch als Hartstoffphase bezeichnet) werden insbesondere Chromnitrid, das vorzugsweise als Cr₂N-Verbindung ausgebildet ist, und Chromcarbid eingesetzt.

Die erfindungsgemäße Beschichtung ist chemisch stabil und bietet einen zuverlässigen Korrosionsschutz bei gleichzeitig niedrigen Oberflächenwiderständen. Die erfindungsgemäße Beschichtung erfüllt auch die Anforderung, nicht selbst durch Korrosion unerwünschte lonen, wie Nickel, Chrom, Blei oder Eisen freizusetzen. Sie kann kostengünstig hergestellt werden.

Weiterhin ist es vorteilhaft, dass nach innen - also in Richtung Substratoberfläche - der Anteil an der Verbindungsphase zunimmt. Insbesondere kann der substratseitige Bereich der Beschichtung ausschließlich aus der Verbindungsphase bestehen.

Dem erfindungsgemäßen Konzept liegen drei grundsätzliche elektrochemische und materialtechnische Prinzipien zugrunde, nämlich
1. dass die außenliegenden Schichten unedler sind als die direkt darunter liegenden Schichten und das Substratmaterial und
2. dass sie chemisch stabil sind in heißer, verdünnter Schwefelsäure in Gegenwart von Fluorionen und
3. die metallische Phase sorgt dafür, dass die Oberflächenwiderstände niedrig bleiben.

Natürlich sind prinzipiell auch reine Metallschichten, z.B. aus Cr, denkbar, aber diese sind erstens chemisch nicht genügend stabil und zweitens weisen sie durch die Passivierung höhere Oberflächenwiderstände aus als die erfindungsgemäßen Mischphasen.

In einer besonders vorteilhaften Ausführung wird zur weiteren chemischen Stabilisierung die Metallphase aus einer Legierung aus mindestens zwei Metallen erzeugt. In der Verbindungsphase sind dann diese Metalle zusammen mit einem Metalloid enthalten. In diesen z.B. ternären Verbindungen ergeben sich die Zusammensetzungen nach den Regeln der Phasengleichgewichte gemäß den Phasendiagrammen für 3-Stoffsysteme. Als besonders vorteilhaft erweisen sich solche Phasen, in denen als Metalle neben Chrom zusätzlich Titan oder Molybdän enthalten sind. Durch die Herstellung dieser mehrkomponentigen Mischphasen direkt an der Oberfläche ist das chemische und elektrochemische "Finetuning" an der Oberfläche möglich. Besonders Molybdän erhöht in der Mischphase die Resistenz gegen Fluorionen.

In allen Fällen zeigen die Untersuchungen, dass nicht nur die elektrochemischen Mischpotentiale an der Oberfläche gezielt eingestellt werden können, sondern auch die Neigung zur Oxidbildung.

Ein weiterer Vorteil der erfindungsgemäßen Beschichtung ist darin zu sehen, dass sie bereits bei sehr niedrigen Schichtdicken einen wirksamen Korrosionsschutz bieten. Die Schichtdicken können daher im Submikronbereich bis einige Mikrometer liegen, insbesondere 0,1 Mikrometer bis 10 Mikrometer, darin vorteilhaft zwischen 0,3 Mikrometer bis 1 Mikrometer.

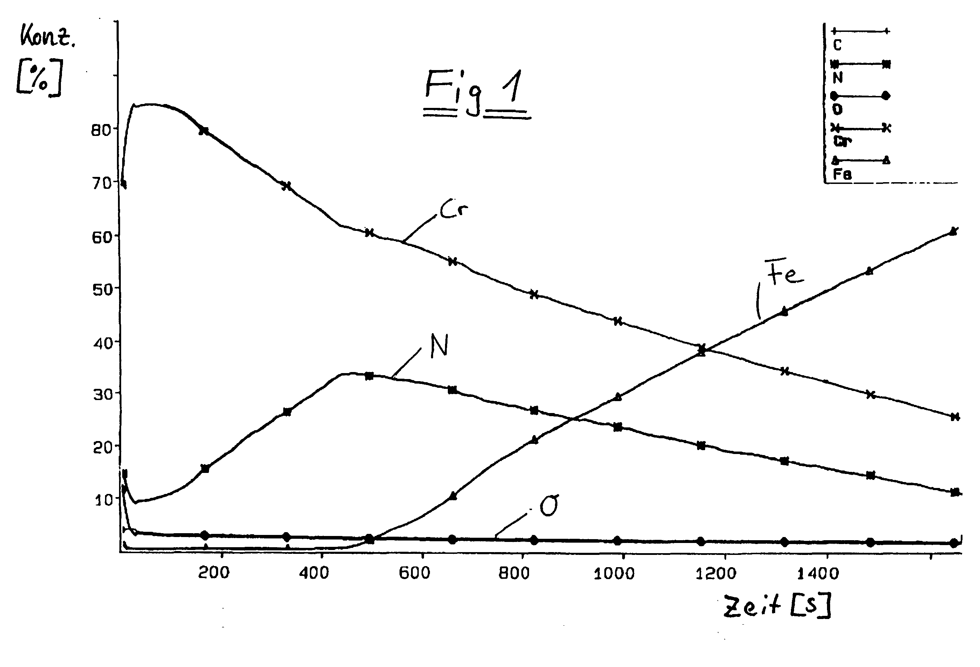

Fig. 1 zeigt den Konzentrationstiefenprofilverlauf bei einer Ausführung der erfindungsgemäßen Beschichtung, hier einer chrombasierten Beschichtung. Entlang der Abszisse sind die Tiefenwerte (angegeben als Sputterzeit zum Aufbringen der Schicht in s), bezogen auf die Außenoberfläche der Beschichtung angegeben, d.h. links liegt der Bereich an der Außenoberfläche der Beschichtung. Auf der Ordinate sind die Konzentrationen der beteiligten Elemente angegeben (die dargestellte Fe-Konzentration geht auf das Substratmaterial - bipolare Platte - zurück). In dem Tiefenprofil ist mit einer Konzentration von 33 At% an Stickstoff die reine Cr₂N-Phase erkennbar. An der Oberfläche beträgt der Anteil dieser Phase ca. 10 % in der Mischphase. Der gemessene Oberflächenwiderstand solch einer Probe liegt bei 12-14 mΩ/cm². Hiermit sind die Oberflächenwiderstände niedriger als diejenige von Kohle. Die chemische Stabilität solcher Schichten ist außergewöhnlich. Sie wird selbst nach Monaten nicht von 0,1 n H₂SO₄ angegriffen. Mittels Atomabsorptionsspektroskopie lassen sich in der Lösung keine Cr-lonen nachweisen. Aufschlussreich sind diesbezüglich auch die cyclovoltametrischen Untersuchungen. Normalerweise werden z.B. auf Edelstahl oder auf Chrom deutliche Passivierungspeaks aufgezeichnet, auf den erfindungsgemäßen Mischphasen fallen die Passivierungen deutlich weniger stark aus. Hiermit erklären sich die niedrigen Oberflächenwiderstände der Schichten. In Tab. 1 ist die Abhängigkeit der Oberflächenwiderstände von den Schichtzusammensetzungen aufgeführt. Zum Vergleich sind auch diejenigen der Chromnitridschichten sowie von Kohle und Gold dargestellt. Chromnitrid weist einen um mehr als das 10fache höheren Widerstand auf als die erfindungsgemäßen Mischphasen. Auch die reine Cr₂N-Phase liegt oberhalb der notwendigen Widerstände.

Ebenfalls in der Tabelle 1 aufgeführt ist die ebenfalls erfindungsgemäße mehrphasige feste Mischung aus Cr-Ti mit einem 15 At%igen Anteil einer (Cr,Ti)₂N-Phase. Die Mischphase ist edler als die entsprechende reine chromhaltige Mischphase, aber immer noch unedler als der Substratwerkstoff, der ein austhenitischem Edelstahl ist.

Die Oberflächenwiderstände dieser Mischphase liegen bei 14-16 mΩ/cm². Die cyclische Voltametrie weist zu höheren Werten hin leicht ausgeprägte Passivierungspeaks auf. Sie liegen bei etwa 1,1 V vs. SCE in 0,1 N H₂SO₄.

Ebenfalls in der Tab. 1 enthalten ist die mehrphasige feste Mischung aus einer metallische Phase aus Cr-Mo mit einem 20 At%igen Anteil der Verbindungsphase (Cr,Mo)₂N.

**Tab. 1**

| **Schicht** | **Oberflächenwiderstand, gemessen mit Kohlediffusionslayer R** (**mΩ/cm**^{**2**}) | **Stickstoffgehalt At%** | **Rest"gase"** |
|---|---|---|---|
| CrN | > 60 | ca. 50 | C, O, B |
| Cr₂N | > 40 | 33,3 | C, O, B |
| Cr mit 40% Cr₂N | 16-19 | 13 | C, O, B |
| Cr mit 20% Cr₂N | 14-16 | 6,6 | C, O, B |
| Cr mit 10% Cr₂N | 12-14 | 3,3 | C, O, B |
| Cr mit 20% Cr₂N + 50 nm Pt | 5-7 | 6,6 | C, O, B |
| CrTi mit 15% (Cr,Ti)₂N | 14-16 | | C, O, B |
| CrMo mit 20% (Cr,Mo)₂N | 13-15 | | C, O, B |
| Kohle | 15 | | |
| Gold | 5 | | |

Die Tabelle zeigt eine weitere Besonderheit der erfindungsgemäßen Lösung auf, nämlich, dass ein nur 50 nm dicker Platinfilm als Endschicht ausreicht, um den Widerstand in die Größenordnung von Goldoberflächen zu kalibrieren. Die gemessene Widerstandsstreuung ergibt sich aus den Rauhheitseffekten der Oberfläche. Diese wurden zur sinnvollen Vergleichbarkeit auf Mittenrauhheitswerte von Ra = 0,15 bis Ra = 0,25 eingestellt.

Als ein gutes Maß für die Qualität der niedrigohmigen Oberfläche kann auch die relative Unabhängigkeit von Anpressdruck des Kohlediffusionslayers auf der Oberfläche angesehen werden. Besonders bei den sehr hochohmigen Schichten werden hier ausgesprochen große Abhängigkeiten gefunden.

## Patentansprüche

1. Metallische Brennstoffzellen-Bipolarplatte, die mit einer Schicht versehen ist, die gegenüber einem korrosiven Gemisch in einer Brennstoffzelle bei einem pH-Wert zwischen 1,5 und 5 chemisch stabil ist, **dadurch gekennzeichnet, dass** die Schicht einen Oberflächenwiderstand von maximal 20 mΩ/cm² aufweist und zumindest im Bereich ihrer kontaktierenden Außenoberfläche mehrphasig ist, wobei eine Phase eine metallischen Phase und/oder deren zugehörige α-Phase ist und eine weitere Phase eine Verbindungsphase aus einem oder mehreren Metallen der metallischen Phase und einem der Elemente N,O,C,B ist.

2. Metallische Brennstoffzellen-Bipolarplatte nach Anspruch 1, **dadurch gekennzeichnet, dass** die metallische Phase aus einem oder einer Legierung aus mehreren der Elemente Cr, Ti, Mo W, V oder Fe besteht.

3. Metallische Brennstoffzellen-Bipolarplatte nach Anspruch 1 oder 2, **dadurch gekennzeichnet, dass** die metallische Phase aus Cr oder aus der α-Phase des Cr besteht.

4. Metallische Brennstoffzellen-Bipolarplatte nach Anspruch 3, **dadurch gekennzeichnet, dass** die Verbindungsphase aus Cr₂N und/oder Cr₇C₃ besteht.

5. Metallische Brennstoffzellen-Bipolarplatte nach Anspruch 1 oder 2, **dadurch gekennzeichnet, dass** die metallische Phase aus einer Legierung aus Cr-Ti oder Cr-Mo besteht.

6. Metallische Brennstoffzellen-Bipolarplatte nach Anspruch 5, **dadurch gekennzeichnet, dass** die Verbindungsphase aus der ternären Verbindung (Cr,Mo)₂N oder (Cr,Ti)₂N besteht.

7. Metallische Brennstoffzellen-Bipolarplatte nach einem der vorangehenden Ansprüche, **dadurch gekennzeichnet, dass** die Zusammensetzung der heterogenen Mischphase bezogen auf den Gehalt an Stickstoff, Kohlenstoff, Sauerstoff oder Bor zwischen x = 4 At% und x = 45 At% liegt.

8. Metallische Brennstoffzellen-Bipolarplatte nach einem der vorangehenden Ansprüche, **dadurch gekennzeichnet, dass** die Konzentration der Verbindungsphase zur Außenoberfläche hin abnimmt.

9. Metallische Brennstoffzellen-Bipolarplatte nach einem der vorangehenden Ansprüche, **dadurch gekennzeichnet, dass** im substratseitigen Bereich der Schicht ausschließlich die metallische Phase vorhanden ist.

10. Metallische Brennstoffzellen-Bipolarplatte nach einem der vorangehenden Ansprüche, **dadurch gekennzeichnet, dass** auf der Außenoberfläche der Beschichtung ein Pt-Film aufgebracht ist.

11. Metallische Brennstoffzellen-Bipolarplatte nach Anspruch 10, **dadurch gekennzeichnet, dass** der Pt-Film eine Dicke von weniger als 100 nm, insbesondere weniger oder gleich 50 nm aufweist.

## Claims

1. Metal bipolar plate for fuel cells, which is provided with a layer that is chemically stable with respect to a corrosive mixture in a fuel cell at a pH of between 1.5 and 5, **characterized in that** the layer has a surface resistance of at most 20 mΩ/cm² and is in multi-phase form at least in the region of its contact-making outer surface, one phase being a metallic phase and/or the associated α-phase thereof and a further phase being a compound phase comprising one or more metals of the metallic phase and one of the elements N, O, C, B.

2. Metal bipolar plate for fuel cells according to Claim 1, **characterized in that** the metallic phase consists of one of the elements or an alloy of more than one of the elements Cr, Ti, Mo, W, V or Fe.

3. Metal bipolar plate for fuel cells according to Claim 1 or 2, **characterized in that** the metallic phase consists of Cr or of α-phase of Cr.

4. Metal bipolar plate for fuel cells according to Claim 3, **characterized in that** the compound phase consists of Cr₂N and/or Cr₇C₃.

5. Metal bipolar plate for fuel cells according to Claim 1 or 2, **characterized in that** the metallic phase consists of an alloy of Cr-Ti or Cr-Mo.

6. Metal bipolar plate for fuel cells according to Claim 5, **characterized in that** the compound phase consists of the ternary compound (Cr, Mo)₂N or (Cr, Ti)₂N.

7. Metal bipolar plate for fuel cells according to one of the preceding claims, **characterized in that** the composition of the heterogeneous mixed phase, based on the nitrogen, carbon, oxygen or boron content, is between x = 4 At% and x = 45 At%.

8. Metal bipolar plate for fuel cells according to one of the preceding claims, **characterized in that** the concentration of the compound phase decreases towards the outside surface.

9. Metal bipolar plate for fuel cells according to one of the preceding claims, **characterized in that** exclusively the metallic phase is present in the substrate-side region of the layer.

10. Metal bipolar plate for fuel cells according to one of the preceding claims, **characterized in that** a film of Pt is applied to the outer surface of the coating.

11. Metal bipolar plate for fuel cells according to Claim 10, **characterized in that** the film of Pt is less than 100 nm thick, in particular less than or equal to 50 nm thick.

## Revendications

1. Plaque bipolaire métallique de cellules de combustibles, qui est munie d'une couche qui dans une cellule de combustibles est chimiquement stable à un mélange corrosif à une valeur pH comprise entre 1,5 et 5,
**caractérisée en ce que** la couche fait preuve d'une résistance superficielle d'un maximum de 20 mΩ/cm² et **en ce qu'**elle est multiphase au moins dans la zone de sa surface extérieure de contact, l'une des phases étant une phase métallique et/ou une phase α faisant partie de cette dernière et une autre phase étant une phase de composés constituée d'un ou de plusieurs métaux de la phase métallique et de l'un des éléments N, O, C, B.

2. Plaque bipolaire métallique de cellules de combustibles selon la revendication 1,
**caractérisée en ce que** la phase métallique est constituée d'un ou de plusieurs alliages de plusieurs des éléments Cr, Ti, Mo W, V ou Fe.

3. Plaque bipolaire métallique de cellules de combustibles selon la revendication 1 ou 2,
**caractérisée en ce que** la phase métallique est constituée de Cr ou de la phase α du Cr.

4. Plaque bipolaire métallique de cellules de combustibles selon la revendication 3,
**caractérisée en ce que** la phase de composés est constituée de Cr₂N et/ou de Cr₇C₃.

5. Plaque bipolaire métallique de cellules de combustibles selon la revendication 1 ou 2,
**caractérisée en ce que** la phase métallique est constituée d'un alliage de Cr-Ti ou de Cr-Mo.

6. Plaque bipolaire métallique de cellules de combustibles selon la revendication 5,
**caractérisée en ce que** la phase de composés est constituée de composants ternaires (Cr,Mo)₂N ou (Cr,Ti)₂N.

7. Plaque bipolaire métallique de cellules de combustibles selon l'une quelconque des revendications précédentes,
**caractérisée en ce que** la composition de la phase mixte hétérogène par rapport à la teneur en azote, en carbone, en oxygène ou en bore se situe entre x = 4% atomique et x = 45% atomique.

8. Plaque bipolaire métallique de cellules de combustibles selon l'une quelconque des revendications précédentes,
**caractérisée en ce que** la concentration de la phase de composés diminue en direction de la surface.

9. Plaque bipolaire métallique de cellules de combustibles selon l'une quelconque des revendications précédentes,
**caractérisée en ce que** seule la phase métallique est présente dans la zone située du côté du substrat.

10. Plaque bipolaire métallique de cellules de combustibles selon l'une quelconque des revendications précédentes,
**caractérisée en ce qu'**un film de Pt est appliqué sur la surface extérieure du revêtement.

11. Plaque bipolaire métallique de cellules de combustibles selon la revendication 10,
**caractérisée en ce que** le film Pt a une épaisseur inférieure à 100 nm, notamment inférieure ou également à 50 nm.
